# EUROPÄISCHE PATENTSCHRIFT

(11) **EP 3 285 347 B1**
(45) Veröffentlichungstag und Bekanntmachung des Hinweises auf die Patenterteilung: **02.12.2020**
(21) Anmeldenummer: 17186101.6
(22) Anmeldetag: 14.08.2017
(51) Int. Cl.: H02G 11/00, A47J 37/06

(54) **ELEKTROGERÄT WOBEI BEI NICHTGEBRAUCH DES GERÄTS DER NETZKABEL DAS OBERTEIL UND DAS UNTERTEIL ZUSAMMENHALT**
ELECTRIC DEVICE
APPAREILLAGE ÉLECTRIQUE

(30) Priorität: 15.08.2016 DE 102016115091
(43) Veröffentlichungstag der Anmeldung: 21.02.2018
(73) Patentinhaber: Caspar Cloer GmbH & Co. KG, 59757 Arnsberg (DE)
(72) Erfinder:
(74) Vertreter: Griepenstroh, Jörg

(56) Entgegenhaltungen:
- DE-A1- 19 809 276
- DE-B- 1 277 974
- DE-U1-202005 016 787
- FR-A1- 2 483 763

## Beschreibung

Die Erfindung betrifft ein Elektrogerät mit den Merkmalen des Patentanspruchs 1. Elektrogeräte benötigen zur Energieversorgung ein Netzkabel. Kleinere Elektrogeräte, die nur zeitweise benötigt werden, werden nach Gebrauch verstaut. Das Netzkabel wird gezogen und bei fest mit dem Gerät verbundenen Kabeln üblicherweise um das Elektrogerät gewickelt. Teilweise gibt es Kabelaufwicklungen im Bodenbereich von Elektrogeräten. Bei kleineren Elektrogeräten und insbesondere bei langen Anschlusskabeln ist ein komplettes Verstauen des Kabels im Bodenbereich jedoch nicht möglich. In der Regel lassen sich solche Elektrogeräte nicht platzsparend verstauen. Oftmals baumelt das Steckerende des Kabels frei umher, so dass Unordnung entsteht. Bei mehrteiligen Elektrogeräten, die zum Beispiel ein Unterteil und einen Deckel aufweisen, kommt hinzu, dass man solche Elektrogeräte teilweise vorsichtiger anfassen muss, um die Verbindung zwischen Deckel und Unterteil durch unbeabsichtiges Öffnen nicht zu beschädigen. Typische Beschädigungen bei unbeabsichtigtem Öffnen sind bei Waffeleisen das Zerkratzen der Beschichtung der Backplatten, Umkippen, Bruch des Scharniers oder bei Sturz aus einem Regal die vollständige Zerstörung. Ein Waffeleisen steht nur sicher hochkant im Regal, wenn es zuverlässig geschlossen ist. Oftmals wird das Kabel dann auch komplett um das Unterteil und über den Deckel gewickelt (DE 20 2005 016 787 U1). Leider braucht das Elektrogerät dadurch besonders viel Platz, selbst wenn es eigentlich sehr flachbauend ausgeführt ist. Bessere Lösungen sehen vor, dass die Verrieglung durch eine Klammer oder durch die Steckkontakte des Netzsteckers erfolgt. Das macht allerdings zusätzliche Öffnungen am Gehäuse erforderlich.

Die FR 2 483 763 A1 offenbart ein Elektrogerät mit zwei beweglich miteinander verbundenen Bauteilen, nämlich mit einem Unterteil und mit einem Oberteil. Die beiden Bauteile sind über eine Schwenkachse miteinander verbunden. An den Längsseiten der beiden Bauteile, d.h. nicht gegenüberliegend der Schwenkachse, sondern im rechten Winkel zur Schwenkachse, sind jeweils am Oberteil und am Unterteil Griffe angeordnet. Das Kabel zum Betrieb des Elektrogerätes kann benachbart der Griffe aufgewickelt werden, so dass die beiden Griffe und damit auch das Oberteil und das Unterteil miteinander verbunden sind. Das Kabel greift dabei in Vertiefungen, die von oben nach unten verlaufen.

Die DE 20 2005 016 787 U1 offenbart ebenfalls ein Elektrogerät mit zwei beweglich miteinander verbundenen Bauteilen über eine Schwenkachse. In der Offenstellung weisen Heizeinrichtungen nach oben. Auf diese Heizeinrichtungen kann beispielsweise eine Heizplatte gelegt werden. Gegenüberliegend der Schwenkachse ist ein Griff angeordnet. Eine Kabelaufwicklung befindet sich seitlich des Griffes und damit auch seitlich der Heizplatten bzw. Heizeinrichtung. Die Kabelaufwicklung besitzt parallel zueinander verlaufende Vertiefungen an dem oberen Bauteil und an dem unteren Bauteil.

Die DE 198 09 276 A1 offenbart einen Koffer für netzbetriebene Elektrogeräte mit einem Anschlusskabel, wie sie insbesondere für die Aufnahme und den Transport von elektrischen Maschinen wie Bohrmaschinen, Handschleifgeräten etc. verwendet werden. Der Koffer soll eine schonende Aufbewahrung des Anschlusskabels ermöglichen, ohne die Außenabmessungen des Koffers stark zu vergrößern. Hierzu besitzt die Bodenschale bzw. die Deckelschale des Koffers wenigstens einen um den Aufnahmeraum herum angeordneten, aus der Basisebene aufragenden, Umwicklungskern für das Kabel.

Die DE 12 77 974 offenbart eine Klemmschelle zur Halterung elektrischer Anschlusskabel. Die Klemmschelle wird benachbart des Kabelendes an einem Elektrokabel befestigt und kann beim Aufwickeln über die vorangegangene Wicklung geklemmt werden. Dadurch kann sich das Kabel nicht selbsttätig abwickeln. Die Klemmschelle kann beim Abwickeln leicht wieder gelöst werden, beispielsweise durch einen etwas ruckartigeren Zug an dem Kabelende. Auf diese Weise kann beispielsweise ein längeres Kabel eines Elektrogerätes, wie z.B. eines Haartrockners, sicher an dem Griff aufgewickelt werden und durch die Klemmschelle fixiert werden, so dass das Kabel sich nicht selbsttätig wieder abwickelt.

Der Erfindung liegt die Aufgabe zugrunde, ein Elektrogerät bereitzustellen, bei welchem nur durch die korrekte Kabelaufwicklung sichergestellt ist, dass das Elektrogerät nicht ungewollt geöffnet werden kann, wobei das Elektrogerät gleichzeitig kompakt ist.

Diese Aufgabe ist bei einem Elektrogerät mit den Merkmalen des Patentanspruchs 1 gelöst.

Das erfindungsgemäße Elektrogerät besitzt zwei miteinander beweglich verbundene Bauteile, die für den Gebrauch von einer Offenstellung in eine Schließstellung verlagerbar sind. Bei den beweglich miteinander verbundenen Bauteilen kann es sich einerseits um ein Unterteil handeln, auf welchem das Elektrogerät steht, wobei das andere Bauteil dementsprechend ein Oberteil ist. Andere Einteilungen wie z. B. linkes oder rechtes Bauteil, vorderes oder hinteres Bauteil sind möglich. Die Erfindung geht von dem Grundgedanken aus, dass zwei miteinander gekoppelte Bauteile in einer Schließstellung gesichert sein sollen. Nachfolgend wird gleichbedeutend zu dem Begriff "Bauteil" auch der Begriff "Oberteil" oder "Unterteil" verwendet, insbesondere in Bezug auf das Ausführungsbeispiel.

Erfindungsgemäß ist vorgesehen, dass an einem der beweglichen Bauteile eine randseitige Kabelaufnahme und an dem anderen der beweglichen Bauteile ein Kabelführungsbereich ausgebildet ist. Randseitig bedeutet in diesem Zusammenhang, dass z. B. bei einem Oberteil die Randseite zwischen einer Oberseite und einer Unterseite dieses Oberteils liegt.

Der Kabelführungsbereich ist dazu ausgebildet, ein Kabel aufzunehmen, das mit dem Elektrogerät verbunden oder verbindbar ist. Bei dem Kabel handelt es sich insbesondere um das Netzkabel. Die lösbare Verbindung des Netzkabels ermöglicht es, standardisierte Netzkabel zu verwenden. Aus Sicherheits- oder Kostengründen kann das Netzkabel auch fest mit dem Elektrogerät verbunden sein.

Das Kabel ist bei der Erfindung dafür vorgesehen, bei Nichtgebrauch des Elektrogerätes um das Elektrogerät gewickelt zu werden, um das Elektrogerät in der Schließstellung zu halten. Hierzu wird das Kabel von dem Kabelführungsbereich des einen Bauteils zur Kabelaufnahme des anderen Bauteils umgelenkt, so dass die beiden Bauteile in der Schließstellung gehalten sind. Beispielsweise kann sich der Kabelführungsbereich am Unterteil befinden, während sich die Kabelaufnahme am Oberteil befindet. Die umgekehrte Konfiguration ist möglich.

Der Begriff "umlenken" steht in diesem Zusammenhang nicht dafür, dass das beim Aufwickeln ohnehin zu biegende Kabel lediglich der Wickelrichtung folgt, wie bei einer trommelförmigen Aufwicklung, sondern, dass das Kabel quer zur Wickelrichtung, die durch den Kabelführungsbereich vorgegeben ist, also seitlich ausgelenkt wird. Die Wickelrichtung wird so verändert, dass die Bauteile durch das Kabel gegeneinander gezogen sind.

Die Kabelführungsbereiche sind beiderseits der Kabelaufnahme angeordnet. Dadurch ist die Kabelaufnahme an ihrem Eintrittsende und auch an ihrem Austrittsende für das Kabel mittels des Kabels gegenüber dem anderen Bauteil verspannbar. Die gleichmäßige Belastung der Kabelaufnahme über ihr Eintrittsende und ihr Austrittsende bewirkt, dass die Bauteile parallel zueinander gehalten sind. Dadurch wird ein Verkippen in einem Gelenkbereich der Kabelaufnahme verhindert.

Der besondere Vorteil der Erfindung ist, dass das Kabel bei einem Elektrogerät mit einem Oberteil und einem Unterteil nicht oberseitig über das Oberteil gewickelt werden muss, um das Oberteil an dem Unterteil in der Schließstellung zu halten, sondern randseitig nämlich im Bereich der Kabelaufnahme um das Oberteil gewickelt werden kann. Dadurch benötigt das Kabel weder unterhalb des Unterteils noch oberhalb des Oberteils zusätzlichen Bauraum. Ein flachbauendes Elektrogerät wird dadurch beim Verstauen beziehungsweise Umwickeln mit dem Netzkabel nicht sperriger oder höher. Die Erfindung vereinfacht daher die Handhabung beim Verstauen. Sie reduziert auch den Platzbedarf des Elektrogeräts bei Nichtgebrauch.

Die räumliche Achse, um die das Kabel gewickelt wird, steht im Wesentlichen senkrecht zur Trenn- bzw. Kontaktebene zwischen den miteinander verbundenen Bauteilen. Diese Wickelachse verläuft bei gelenkig miteinander verbundenen Bauteilen senkrecht und im Abstand zur Gelenkachse.

Durch das bereichsweise Umlenken ändert sich in diesem Bereich auch die Raumrichtung der Wickelachse ein wenig. Insgesamt betrachtet erfolgt die Wicklung um eine Wickelachse, die senkrecht zur Trennebene und damit senkrecht zum Oberteil und zum Unterteil verläuft. Das heißt, die Wickelachse liegt nicht parallel zur oder in der Trennebene.

Gemäß einer Weiterbildung der Erfindung hat die besagte Kabelaufnahme an dem als Oberteil ausgeführten Bauteil eine besondere Position gegenüber einem Kabelführungsbereich an dem als Unterteil ausgeführten Bauteil. Die Kabelaufnahme befindet sich in der Schließstellung zumindest teilweise in einer Ebene oberhalb eines Kabelführungsbereiches des Unterteils.

Das Unterteil des Elektrogerätes ist das Bauteil, das auf einer Aufstandsfläche aufsteht. Die Begriffe "oberhalb" oder "Oberteil" sind so zu verstehen, das der senkrechte Abstand des Oberteils von einer Aufstandsfläche des Elektrogeräts größer ist als bei dem Unterteil. Das Oberteil befindet sich in diesem Sinne oberhalb des Unterteils.

Dadurch, dass die Kabelaufnahme auch in der Schließstellung höher als der Kabelführungsbereich des Unterteils angeordnet ist, muss das Kabel beim Aufwickeln im Übergang von der Kabelaufnahme zum Kabelführungsbereich umgelenkt werden. Dieses Umlenken des Kabels bewirkt, dass die Kabelaufnahme durch das Kabel nach unten in Richtung des Unterteils verspannt wird. Hierzu muss das Kabel nicht einmal relativ stramm um das Oberteil beziehungsweise die Kabelaufnahme gewickelt werden. Die Reibung zwischen den einzelnen Wicklungen des Kabels bzw. die Reibung zwischen dem Kabel und dem Gehäuse bewirkt zudem, dass das Oberteil auch dann nicht in die Offenstellung verlagert werden kann, wenn das freie, mit einem Stecker versehenen Ende des Kabels nicht in besonderer Art und Weise fixiert ist. Das bedeutet, dass man das Elektrogerät auch durch Greifen des Oberteils aus einem Schrank herausheben kann, ohne zu befürchten, dass es aufklappt oder das Oberteil vom Unterteil abbricht. Das ist insbesondere dann von Vorteil, wenn das Oberteil und/oder das Unterteil jeweils für sich betrachtet relativ schwer sind, wie es zum Beispiel bei heißen Platten von elektrischen Wärmegeräten, wie zum Beispiel bei Waffeleisen der Fall ist. Waffeleisen besitzen metallische Heizeinrichtungen am Oberteil und am Unterteil und haben daher ein nicht unerhebliches Gewicht. Bei unsachgemäßer Handhabung wie z.B. bei ungewolltem Öffnen kann die Verbindung zwischen Oberteil und Unterteil beschädigt werden. Die erfindungsgemäße Kabelaufnahme verhindert das. Insbesondere können diese Elektrogeräte hochkant, z.B. auf dem Griff stehend, sicher verstaut werden.

Die Vorteile der Erfindung stellen sich auch dann ein, wenn der Kabelführungsbereich am Oberteil und die Kabelaufnahme am Unterteil ausgebildet sind.

Die Erfindung berücksichtigt auch die Möglichkeit, dass Kabelführungsbereiche sowohl am Oberteil als auch am Unterteil ausgebildet sind und dementsprechend Kabelaufnahmen sowohl am Oberteil als auch am Unterteil ausgebildet sind. Mithin sind die beweglich miteinander verbundenen Bauteile jeweils mit den entsprechenden Elementen zur Kabelführung bzw. Kabelaufnahme ausgebildet. Das ermöglicht es sicherzustellen, dass der Benutzer je nach bevorzugter Wickelrichtung die beiden Bauteile miteinander verriegeln kann. Bevorzugt ist allerdings das Bauteil, an dem das Kabel angeschlossen ist oder mit welchem das Kabel verbindbar ist, dasjenige mit dem Kabelführungsbereich und das jeweils andere Bauteil, dasjenige mit der Kabelaufnahme.

Die Erfindung geht bevorzugt davon aus, dass die Bauteile verschwenkbar miteinander verbunden sind. Die Verschwenkbewegung kann insbesondere ein Verschwenken um eine starre Achse bedeuten. Die Verbindung kann als Drehgelenk ausgebildet sein. Dreh-Schub-Gelenke oder Führungskulissen sind ebenso als Verbindung möglich.

Die Kabelaufnahme ist entfernt von einer Verbindung, insbesondere einem Drehgelenk zwischen den Bauteilen angeordnet. Die Kabelaufnahme ist diametral zu der Verbindung angeordnet. Die diametrale Anordnung hat den Vorteil, dass der Bereich, der sich am weitesten öffnen lässt, fixiert wird, sodass auch bei sehr lockerem Aufwickeln immer noch sichergestellt ist, dass sich das eine Bauteil nicht komplett in die Offenstellung verlagern lässt.

Die Kabelaufnahme muss sicherstellen, dass das Kabel nicht selbsttätig aus der Kabelaufnahme heraus rutscht. Hierzu besitzt die Kabelaufnahme bevorzugt einen konkaven Bereich. Er dient zur Aufnahme des Kabels. Vorzugsweise besitzt der konkave Bereich wenigstens einen Vorsprung, der an einem zum anderen Bauteil weisenden Ende der Kabelaufnahme angeordnet ist. Vorzugsweise ist die Kabelaufnahme L-, oder C-förmig. Die Kabelaufnahme kann auch mehrere Vorsprünge aufweisen, beispielsweise Riffelungen, um die Windungen des aufgewickelten Kabels noch besser zu führen.

Vorzugsweise ist der konkave Bereich der Kabelaufnahme zu seiner Mündung hin erweitert. Das erleichtert beim Aufwickeln das Einführen des Kabels in die Kabelaufnahme und bewirkt eine Zentrierung des Kabels innerhalb der Kabelaufnahme.

Die Kabelaufnahme ist vorzugsweise angrenzend zu einem Griff an einem der Bauteile angeordnet, wobei der Griff selbst ein Ende der Kabelaufnahme bildet. Der übrige Bereich einer solchen Kabelaufnahme ist dann ein im Wesentlichen L-förmiger Vorsprung benachbart zum Griff.

Die Kabelaufnahme kann sich über die Trennebene zwischen einem Oberteil und einem Unterteil erstrecken, so dass die Kabelaufnahme in der Schließstellung bis in den Bereich des Unterteils ragt. Die Kabelaufnahme sollte zumindest teilweise höher als der höchste Punkt des vorstehend beschriebenen Kabelführungsbereichs des Unterteils liegen, um eine hinreichende Umlenkung und damit Verspannung des Oberteils gegenüber dem Unterteil durch das Kabel zu bewirken.

Die Kabelaufnahme besteht vorzugsweise aus Kunststoff. Es kann sich um denselben Kunststoff handeln, aus dem auch der Griff gefertigt sein kann. Gleichzeitig kann die Kabelaufnahme im Bereich des Griffes als zusätzlicher Schutz verstanden werden, der den Bediener vor thermischen Einflüssen des Elektrogeräts, bei dem es sich vorzugsweise um ein Wärmegerät handelt, schützt. Der Griff und die Kabelaufnahme können materialeinheitlich einstückig gefertigt sein. Die Kabelaufnahme ist funktional kein Teil des Griffes der zum Greifen dient, sondern funktional selbstständig.

In vorteilhafter Weiterbildung ist an einem einen Stecker aufweisenden freien Ende des Kabels ein Klemmmittel dazu ausgebildet, das freie Ende des Kabels mit einer vorangegangenen Wicklung desselben Kabels zu verbinden. Ein solches Klemmmittel, das auch als Clip bezeichnet werden kann, verhindert das selbsttätige Abwickeln des Kabels bei Nichtgebrauch. Ein Klemmmittel ist allerdings nicht zwingend erforderlich, da bereits das Wickeln um die Kabelaufnahme und den hinteren Scharnierbereich ausreicht, um das Elektrogerät sicher zu verriegeln.

Als weitere vorteilhafte, aber für die sichere Verriegelung nicht zwingend erforderliche Ausgestaltung ist eine Haltenut zu nennen. Eine solche Haltenut dient zur Aufnahme von Windungen des aufgewickelten Kabels im Bereich der Kabelführung. Ein relativ starres Kabel neigt aufgrund der Umlenkung von der Kabelführung zur Kabelaufnahme dazu, nicht eng an dem Elektrogerät entlang zu verlaufen. Das ist auf den, wenn auch in der Regel geringen Widerstand gegen die Biegung des Kabels zurückzuführen. Um dennoch eine besonders kompakte Kabelführung zu ermöglichen, kann das Kabel in Haltenuten, die vorzugsweise zu den Randseiten des Bauteils hin offen sind, eingeführt werden. Das Kabel steht dann nicht über der Unterseite des Elektrogerätes vor. Ebenso wenig steht das Kabel über die Oberseite des Oberteils vor. Es befindet sich zum größten Teil seiner Länge im Bereich des Unterteils im Bereich der Kabelführung, das heißt bevorzugt im Wesentlichen in horizontaler Anordnung.

Die Erfindung ermöglicht es, ein Kabel platzsparend, insbesondere horizontal um ein Elektrogerät zu wickeln und allein dadurch zu verhindern, dass sich das Elektrogerät nach oben öffnet. Ein solches Gerät ist platzsparend verstaubar und vor Beschädigungen besser geschützt. Zusätzliche Öffnungen für Klammern oder andere Zuhaltemittel sind nicht erforderlich. Die erfindungsgemäße Kabelaufwicklung führt zu mehr Sicherheit in der Handhabung, insbesondere bei elektrischen Wärmegeräten mit beweglich angeordneten Heizplatten, wie z.B. bei Waffeleisen oder bei Sandwichmakern.

Die Erfindung wird nachfolgen anhand eines in schematischen Zeichnungen dargestellten Ausführungsbeispiels näher erläutert.

Es zeigen:
- Figur 1: ein Elektrogerät in der Seitenansicht;
- Figur 2: das Elektrogerät der Figur 1 in einer rückwärtigen Ansicht;
- Figur 3: das Elektrogerät der Figur 1 in der Seitenansicht;
- Figur 4: das Elektrogerät der Figur 3 in einer Frontansicht ohne Kabel;
- Figur 5: das Elektrogerät der Figur 1 in einer Perspektive von schräg unten und
- Figur 6: das Elektrogerät der Figur 1 in einer anderen Perspektive ebenfalls von schräg unten.

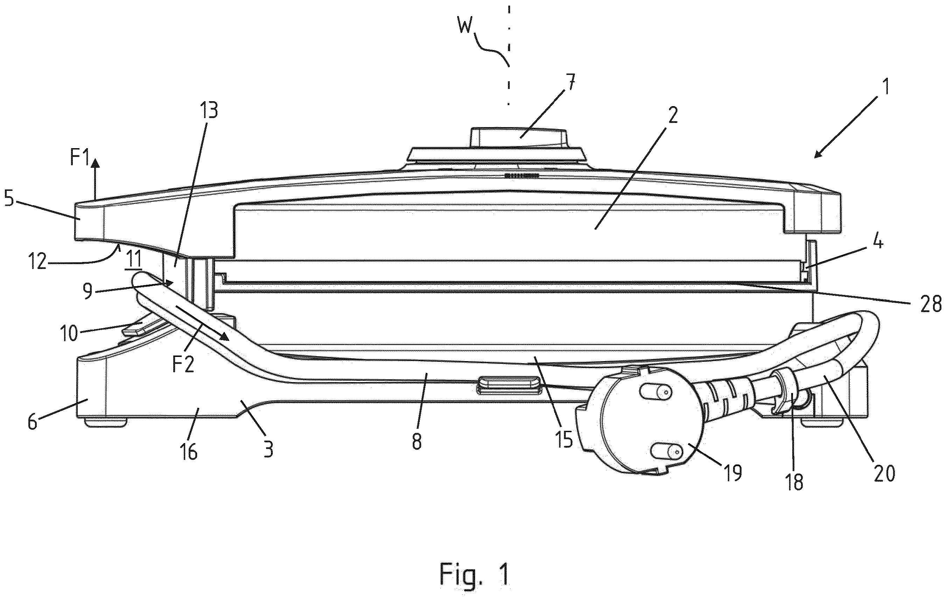

Figur 1 zeigt ein Elektrogerät 1 in Form eines Wärmegeräts, konkret in Form eines Waffeleisens. Das Elektrogerät 1 besitzt zwei bewegliche Bauteile 2, 3 in Form eines Oberteils und eines Unterteils. Das obere Bauteil 2 ist über eine Verbindung 4 in Form eines Gelenks schwenkbeweglich mit dem unteren Bauteil 3 verbunden und kann von einer Offenstellung in eine Schließstellung verlagert werden. Alle Abbildungen zeigen die Schließstellung des oberen Bauteils 2.

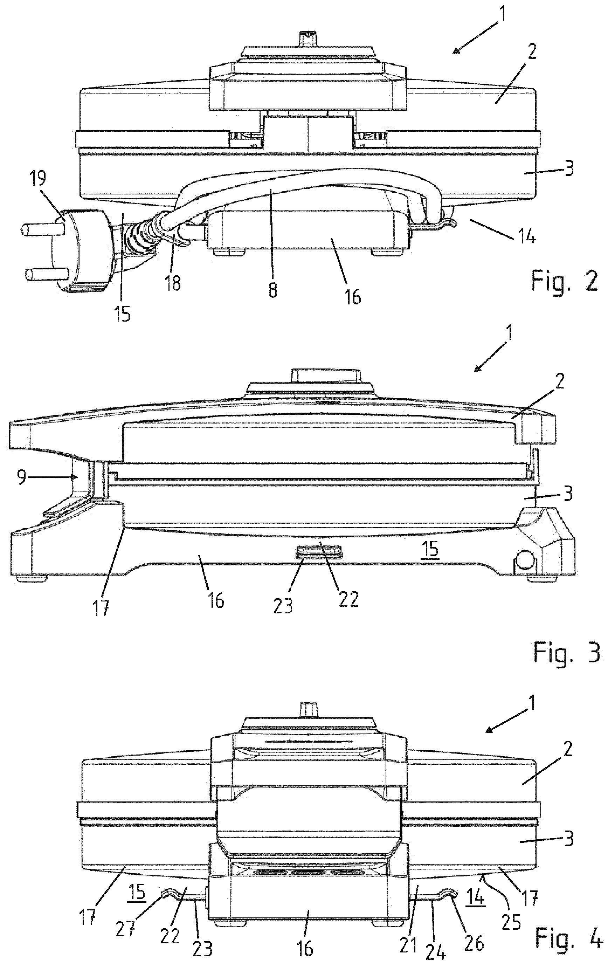

Gegenüberliegend der Verbindung 4 in Form eines Gelenks befindet sich am oberen Bauteil 2 ein Griff 5 zum Aufklappen des Elektrogeräts 1. Das Elektrogerät 1 ist in seiner Grundform bei diesem Ausführungsbeispiel kreisrund, wobei der Griff 5 in Radialrichtung vorsteht und damit vom Gelenk 4 weg weist. Die Grundform des Elektrogerätes kann auch oval oder mehreckig sein. Am unteren Bauteil 3 befindet sich unterhalb des Griffs 5 ein Vorsprung 6, der genauso weit in Radialrichtung hervorragt, wie der Griff 5. Auf der Oberseite des Elektrogeräts 1 befindet sich ein Bedienelement 7. Mit dem unteren Bauteil 3 ist ein Kabel 8 fest verbunden. Das elektrische Anschlusskabel ist in der Nähe des Gelenks 4 aus dem unteren Bauteil 3 herausgeführt und unlösbar mit dem unteren Bauteil 3 verbunden. Alternativ kann das Anschlusskabel auch mit dem oberen Bauteil 2 verbunden sein. In der Darstellung der Figuren 1 und 2 ist das Kabel 8 mehrfach um das Elektrogerät 1 gewickelt. Eine Besonderheit ist der Verlauf des Kabels 8.

Das Kabel 8 wird vom rückwärtigen Bereich des Elektrogeräts 1 zunächst in Horizontalrichtung, das heißt im Wesentlichen parallel zur Unterseite des Elektrogeräts 1 nach vorne geführt, dann zwischen dem Vorsprung 6 und dem Griff 5 hindurchgeführt und anschließend wieder zurück zum hinteren Ende geführt. Es gibt zwei Windungen. Es wird gewissermaßen horizontal aufgewickelt. Eine Wickelachse W steht daher senkrecht zu dem oberen Bauteil 2 und zum unteren Bauteil 3 sowie zu einer Trennebene 28 zwischen den beiden Bauteilen 2, 3.

Das Kabel 8 wird zwischen dem Griff 5 und dem Vorsprung 6 allerdings durch eine Kabelaufnahme 9 geführt, die mit dem oberen Bauteil 2 verbunden ist. Die Kabelaufnahme 9 ist bei dem Ausführungsbeispiel konkav ausgebildet und erweitert sich in Richtung zu ihrer Mündung, das heißt zu den distalen Enden des Griffes 5 bzw. Vorsprunges 6 hin. Die Kabelaufnahme 9 ist im Querschnitt C-förmig. Ein unteres Ende 10 der Kabelaufnahme 9 ist an den Verlauf des Vorsprunges 6 angepasst. Das heißt, das untere Ende 10 weist gewissermaßen zum unteren Bauteil 3 hin, so dass sich der insgesamt konkave Bereich 11 der Kabelaufnahme 9 zu seiner Mündung hin erweitert. Der konkave Bereich 11 der Kabelaufnahme 9 wird nach oben hin, das heißt zum oberen Bauteil 2 hin durch die eine Unterseite 12 des Griffes 5 begrenzt. Die Kabelaufnahme 9 besitzt neben dem unteren, abgekröpften Ende 10 einen senkrechten Abschnitt 13. Im Übergangsbereich zwischen dem senkrechten Abschnitt 13 und dem abgekröpften Ende 10 verlaufen die Windungen des Kabels 8. Das ist darauf zurückzuführen, dass das Kabel 8 vor und hinter der Kabelaufnahme 9 unterhalb des unteren Bauteils 3 hindurchgeführt wird und zwar in dafür vorgesehenen Kabelführungsbereichen 14, 15. Die Kabelführungsbereiche 14, 15 sind unterhalb eines zylindrische mittleren Teiles des Elektrogerätes 1 angeordnet. Hierzu ist am unteren Bauteil 2 ein Sockelelement 16 ausgebildet, aus dem auch das Kabel 8 austritt. Das Sockelelement 16 ist im Wesentlichen rechteckig konfiguriert und erstreckt sich über eine Breite, die kleiner ist als der Durchmesser des zylindrischen Mittelteils des Elektrogerätes 1. Dadurch ergeben sich unterhalb der Stirnseiten des zylindrischen Mittelteils Freiräume. Diese werden zur Kabelführung genutzt und bilden beiderseits des im Wesentlichen rechteckig konfigurierten Sockelelements 16 genügend Freiraum zur Aufnahme der Wicklungen des Kabels 8. Eine Besonderheit ist, dass das Kabel 8 beim Übergang von dem Kabelführungsbereich 14, 15 zur Kabelaufnahme 9 nach schräg oben umgelenkt werden muss.

Figur 3 zeigt eine Kante 17 am unteren Bauteil 3, um welche das in Figur 3 nicht näher dargestellte Kabel umgelenkt werden muss. Diese Kante 17 bewirkt, dass auch eine Kraft, wie sie zum Öffnen des obere Bauteil 2 am Griff 5 angreifen würde, in das untere Bauteil 3 eingeleitet wird. Figur 1 zeigt einen Kraftvektor F1, der am Griff 5 angreift und nach oben gerichtet ist. So könnte das Elektrogerät 1 geöffnet werden. Das Öffnen wird dadurch verhindert, dass das Kabel 8 die Kraft F1 aufnimmt. Der Kraftvektor F2 verdeutlicht die Kraftwirkungsrichtung innerhalb des Kabels 8. Da das Kabel 8 fest mit dem unteren Bauteil 3 verbunden ist und in der Position verharrt, wird das untere Bauteil 3 zusammen mit dem oberen Bauteil 2 angehoben. Mit anderen Worten kann das Elektrogerät 1 so nicht geöffnet werden.

Hierzu trägt auch bei, dass das Kabel 8 zusätzlich durch ein Klemmelement 18 gemäß Figur 2 gesichert ist. Das Klemmelement 18 befindet sich benachbart einem Stecker 19 am freien Ende 20 des Kabels 8. Es wird von dem Kabel 8 durchsetzt und ist an diesem unverlierbar gehalten. Es wird über eine vorher gelegte Windung des Kabels 8 gesteckt und ist dadurch klemmgehaltert.

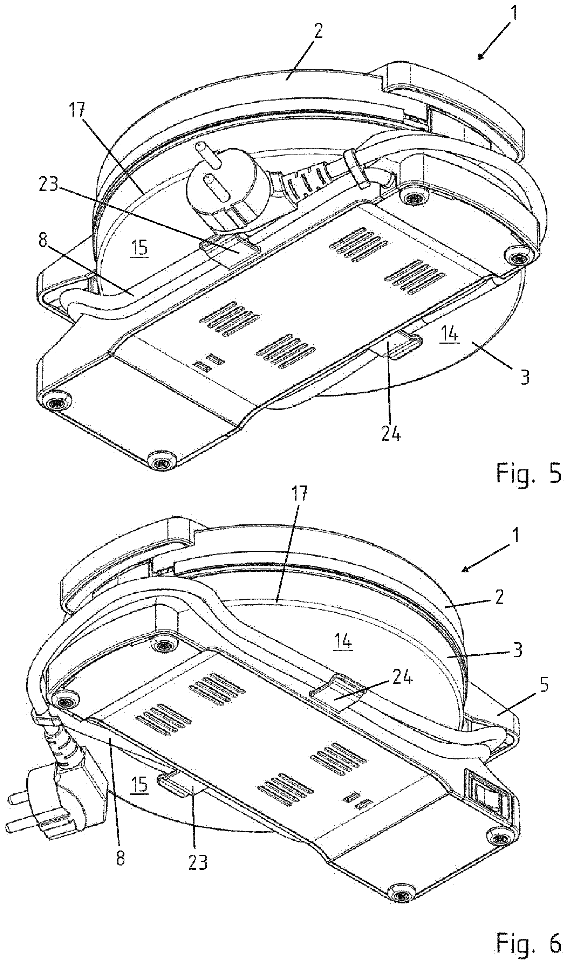

Zusätzlich ist im Kabelführungsbereich 14 jeweils beidseitig des Sockelelements 16 jeweils eine Haltenut 21, 22 ausgebildet (Figur 4). Die Haltenuten 21, 22 nehmen jeweils die Windungen des Kabels 8 auf, wie gut anhand der Figuren 5 und 6 zu erkennen ist. Die Haltenuten 21, 22 befinden sich oberhalb von Vorsprüngen 23, 24 längsseitig des im Wesentlichen rechteckigen Sockelelements 16. Die Vorsprünge 23, 24 sind vergleichbar mit Federzungen. Ihre Enden sind zur Unterseite 25 des zylindrischen Mittelteils des Elektrogeräts 1 hin beabstandet, so dass die Nuten oberseitig von der Unterseite 25 des zylindrischen Mittelteils und nach unten hin von den Vorsprüngen 23, 24 begrenzt sind. An dem freien Ende der Vorsprünge 23, 24 sind zur Unterseite 25 des zylindrischen Mittelteils hin gerichtete Ausstellungen 26, 27 angeordnet. Dadurch verjüngt sich die jeweilige Haltenut 21, 22 mündungsseitig, so dass das aufgewickelte Kabel 8 klemmend in den Haltenuten 21, 22 gehalten ist und nicht so leicht herausrutschen kann. Die Figuren 5 und zeigen das sehr anschaulich.

Im rückwärtigen Bereich des Elektrogeräts 1 im Bereich des Gelenkes 4 sind die Windungen des Kabels 8 ebenfalls leicht nach oben geführt, vergleichbar zum vorderen Bereich mit der Kabelaufnahme, die allerdings im vorderen Bereich mit dem oberen Bauteil 2 verbunden ist. Im rückwärtigen Bereich ist das nicht erforderlich, da das obere Bauteil 2 hier ohnehin über das Gelenk 4 fest mit dem unteren Bauteil 3 verbunden ist.

### Bezugszeichen:

- 1 -: Elektrogerät
- 2 -: Bauteil (Oberteil)
- 3 -: Bauteil (Unterteil)
- 4 -: Verbindung
- 5-: Griff
- 6 -: Vorsprung
- 7 -: Bedienelement
- 8-: Kabel
- 9 -: Kabelaufnahme
- 10 -: unteres Ende von 9
- 11 -: konkaver Bereich
- 12 -: Unterseite von 5
- 13 -: senkrechter Teil von 9
- 14 -: Kabelführungsbereich
- 15 -: Kabelführungsbereich
- 16 -: Sockelelement
- 17 -: vordere Kante von 14, 15
- 18 -: Klemmelement
- 19 -: Stecker
- 20 -: freies Ende von 8
- 21 -: Haltenut
- 22 -: Haltenut
- 23 -: Vorsprung
- 24 -: Vorsprung
- 25 -: Unterseite
- 26 -: Ausstellung
- 27 -: Ausstellung
- 28 -: Trennebene

- F1 -: Kraftvektor an 5
- F2 -: Kraftvektor an 8
- W -: Wickelachse

## Patentansprüche

1. Elektrogerät mit zwei beweglich miteinander verbundenen Bauteilen (2, 3), die für den Gebrauch von einer Offenstellung in eine Schließstellung verlagerbar sind und ein Kabel (8), wobei an einem der beweglichen Bauteile (2, 3) eine randseitige Kabelaufnahme (9) und an dem anderen der beweglichen Bauteile (2, 3) ein Kabelführungsbereich (14, 15) ausgebildet ist, wobei der Kabelführungsbereich (14, 15) dazu ausgebildet ist, das Kabel (8) aufzunehmen, das mit dem Elektrogerät (1) verbunden oder verbindbar ist und welches bei Nichtgebrauch des Elektrogeräts (1) in der Schließstellung derart um das Elektrogerät (1) gewickelt ist, dass die beiden Bauteile (2, 3) in der Schließstellung gehalten sind, **dadurch gekennzeichnet, dass** zwei Kabelführungsbereiche (14, 15) beiderseits der Kabelaufnahme (9) angeordnet sind, so dass die Kabelaufnahme (9) an ihrem Eintrittsende und an ihrem Austrittsende für das Kabel (8) mittels des Kabels (8) gegenüber dem anderen Bauteil (2, 3) verspannbar ist, wobei das Kabel (8) von dem Kabelführungsbereich (14, 15) des einen Bauteils (2, 3) zur Kabelaufnahme (9) des anderen Bauteils (2, 3) umgelenkt ist, wobei die Kabelaufnahme (9) diametral zu einer als Gelenk ausgebildeten Verbindung (4) zwischen den Bauteilen (2, 3) angeordnet ist.

2. Elektrogerät nach Anspruch 1, **dadurch gekennzeichnet, dass** das eine Bauteil (3) ein Unterteil ist, auf welchem das Elektrogerät (1) steht, und das andere Bauteil (2) ein Oberteil ist.

3. Elektrogerät nach Anspruch 1 oder 2, **dadurch gekennzeichnet, dass** die Kabelaufnahme (9) in der Schließstellung in einer Ebene oberhalb des Kabelführungsbereiches (14, 15) des als Unterteil ausgeführten Bauteils (3) angeordnet ist, so dass das aufgewickelte Kabel (8) im Übergang von der Kabelaufnahme (9) zum Kabelführungsbereich (14, 15) umgelenkt wird und die Kabelaufnahme (9) an einer Verlagerung in die Offenstellung hindert.

4. Elektrogerät nach einem der Ansprüche 1 bis 3, **dadurch gekennzeichnet, dass** die Kabelaufnahme (9) einen konkaven Bereich (11) aufweist, der zur Aufnahme des Kabels (8) dient, und einen Vorsprung aufweist, der an einem zum anderen Bauteil (2, 3) weisenden Ende (10) der Kabelaufnahme (9) angeordnet ist.

5. Elektrogerät nach einem der Ansprüche 1 bis 4, **dadurch gekennzeichnet, dass** die Kabelaufnahme (9) L- oder C-förmig ist.

6. Elektrogerät nach Anspruch 4 oder 5, **dadurch gekennzeichnet, dass** der konkave Bereich (11) zu seiner Mündung hin erweitert ist.

7. Elektrogerät nach einem der Ansprüche 1 bis 6, **dadurch gekennzeichnet, dass** die Kabelaufnahme (9) angrenzend zu einem Griff (5) an einem der Bauteile (2, 3) angeordnet ist, wobei der Griff (5) ein Ende der Kabelaufnahme (9) bildet.

8. Elektrogerät nach einem der Ansprüche 1 bis 7, **dadurch gekennzeichnet, dass** an einem einen Stecker (19) aufweisenden freien Ende (20) des Kabels (8) ein Klemmmittel (18) dazu ausgebildet ist, das freies Ende (20) des Kabels (8) mit einer vorangegangenen Wicklung desselben Kabels (8) zu verbinden.

9. Elektrogerät nach einem der Ansprüche 1 bis 8, **dadurch gekennzeichnet, dass** im Kabelführungsbereich (14, 15) wenigstens eine Haltenut (21, 22) zur Aufnahme von Windungen des aufgewickelten Kabels (8) angeordnet ist.

10. Elektrogerät nach einem der Ansprüche 1 bis 9, **dadurch gekennzeichnet, dass** es ein Wärmegerät mit mindestens einer Heizeinrichtung an wenigstens einem der Bauteile (2, 3) ist.

11. Elektrogerät nach Anspruch 10, **dadurch gekennzeichnet, dass** es ein Waffeleisen oder ein Sandwichmaker ist.

## Claims

1. Electrical appliance having two movably interconnected components (2, 3) which can be displaced from an open position into a closed position for use, and having a cable (8), wherein an edge cable receptacle (9) is formed on one of the moveable components (2, 3) and a cable routing area (14, 15) is formed on the other of the moveable components (2, 3), wherein the cable routing area (14, 15) is designed to receive the cable (8), which is connected or can be connected to the electrical appliance (1) and which is wound around the electrical appliance (1) when the electrical appliance (1) is not in use in the closed position in such a way that the two components (2, 3) are held in the closed position, **characterised in that** two cable routing areas (14, 15) are arranged on both sides of the cable receptacle (9) such that the cable receptacle (9), at its entry end and at its exit end for the cable (8), can be clamped relative to the other component (2, 3) by means of the cable (8), wherein the cable (8) is deflected from the cable routing area (14, 15) of one component (2, 3) to the cable receptacle (9) of the other component (2, 3), wherein the cable receptacle (9) is arranged diametrically to a connection (4) formed as a joint between the components (2, 3).

2. Electrical appliance according to claim 1, **characterised in that** one component (3) is a lower part on which the electrical appliance (1) stands and the other component (2) is an upper part.

3. Electrical appliance according to claim 1 or 2, **characterised in that** the cable receptacle (9), in the closed position, is arranged in a plane above the cable routing area (14, 15) of the component (3) designed as the lower part, such that the wound cable (8) is deflected in the transition from the cable receptacle (9) to the cable routing area (14, 15) and prevents the cable receptacle (9) from being displaced into the open position.

4. Electrical appliance according to any of claims 1 to 3, **characterised in that** the cable receptacle (9) has a concave area (11) which serves to receive the cable (8), and has a projection which is arranged at an end (10) of the cable receptacle (9) pointing towards the other component (2, 3).

5. Electrical appliance according to any of claims 1 to 4, **characterised in that** the cable receptacle (9) is L- or C-shaped.

6. Electrical appliance according to claim 4 or 5, **characterised in that** the concave area (11) is widened towards its mouth.

7. Electrical appliance according to any of claims 1 to 6, **characterised in that** the cable receptacle (9) is arranged adjacent to a handle (5) on one of the components (2, 3), wherein the handle (5) forms one end of the cable receptacle (9).

8. Electrical appliance according to any of claims 1 to 7, **characterised in that**, at a free end (20) of the cable (8) having a plug (19), a clamping means (18) is designed to connect the free end (20) of the cable (8) to a preceding winding of the same cable (8).

9. Electrical appliance according to any of claims 1 to 8, **characterised in that** at least one holding groove (21, 22) for receiving turns of the wound cable (8) is arranged in the cable routing area (14, 15).

10. Electrical appliance according to any of claims 1 to 9, **characterised in that** it a heating appliance having at least one heating unit on at least one of the components (2, 3).

11. Electrical appliance according to claim 10, **characterised in that** it is a waffle iron or a sandwich maker.

## Revendications

1. Appareil électrique avec deux composants (2, 3) reliés entre eux de manière mobile qui peuvent être déplacés d'une position ouverte à une position fermée pour l'utilisation et un câble (8), dans lequel un logement de câble (9) côté bord est formé sur l'un des composants mobiles (2, 3) et une zone de guidage de câble (14, 15) est formée sur l'autre composant mobile (2, 3), dans lequel la zone de guidage de câble (14, 15) est conçue pour recevoir le câble (8) qui est connecté ou peut être connecté à l'appareil électrique (1) et qui est enroulé autour de l'appareil électrique (1) lorsque l'appareil électrique (1) n'est pas utilisé en position fermée de sorte que les deux composants (2, 3) sont maintenus en position fermée, **caractérisé en ce que** deux zones de guidage de câble (14, 15) sont disposées des deux côtés du logement de câble (9), de sorte que le logement de câble (9) est positionné à son extrémité d'entrée et à son extrémité de sortie pour le câble (8) au moyen du câble (8) par rapport à l'autre composant (2, 3), dans lequel le câble (8) est dévié de la zone de guidage de câble (14, 15) de l'un composant (2, 3) vers le logement de câble (9) de l'autre composant (2, 3), dans lequel le logement de câble (9) est disposé diamétralement par rapport à une connexion (4) conçue en tant qu'articulation entre les composants (2, 3).

2. Appareil électrique selon la revendication 1, **caractérisé en ce qu'**un composant (3) est une partie inférieure sur laquelle l'appareil électrique (1) repose et l'autre composant (2) est une partie supérieure.

3. Appareil électrique selon la revendication 1 ou 2, **caractérisé en ce que** le logement de câble (9) est disposé en position fermée dans un plan au-dessus de la zone de guidage de câble (14, 15) du composant (3) conçu en tant que partie inférieure, de sorte que le câble enroulé (8) est dévié dans la transition du logement de câble (9) à la zone de guidage de câble (14, 15) et empêche le déplacement du logement de câble (9) en position ouverte.

4. Appareil électrique selon l'une quelconque des revendications 1 à 3, **caractérisé en ce que** le logement de câble (9) présente une zone concave (11) qui sert à recevoir le câble (8) et présente une saillie qui est disposée à une extrémité (10) du logement de câble (9) tournée vers l'autre composant (2, 3).

5. Appareil électrique selon l'une quelconque des revendications 1 à 4, **caractérisé en ce que** le logement de câble (9) est en forme de L ou de C.

6. Appareil électrique selon la revendication 4 ou 5, **caractérisé en ce que** la zone concave (11) est élargie vers son embouchure.

7. Appareil électrique selon l'une quelconque des revendications 1 à 6, **caractérisé en ce que** le logement de câble (9) est disposé à côté d'une poignée (5) sur l'un des composants (2, 3), dans lequel la poignée (5) forme une extrémité du logement de câble (9).

8. Appareil électrique selon l'une quelconque des revendications 1 à 7, **caractérisé en ce qu'**un moyen de serrage (18) est formé sur une extrémité libre (20) du câble (8) ayant un connecteur (19) pour connecter l'extrémité libre (20) du câble (8) à un enroulement précédent du même câble (8).

9. Appareil électrique selon l'une quelconque des revendications 1 à 8, **caractérisé en ce qu'**au moins une rainure de retenue (21, 22) destinée à recevoir des spires du câble enroulé (8) est disposée dans la zone de guidage de câble (14, 15).

10. Appareil électrique selon l'une quelconque des revendications 1 à 9, **caractérisé en ce qu'**il un appareil thermique avec au moins un dispositif de chauffage sur au moins un des composants (2, 3).

11. Appareil électrique selon la revendication 10, **caractérisé en ce qu'**il s'agit d'un gaufrier ou d'un appareil à sandwiches.
